(19)
Europäisches
Patentamt

European
Patent Office

Office européen
des brevets

(11)  **EP 2 123 442 A1**

(12)  **EUROPEAN PATENT APPLICATION**
published in accordance with Art. 153(4) EPC

(43) Date of publication:
**25.11.2009  Bulletin 2009/48**

(21) Application number: **07850607.8**

(22) Date of filing: **14.12.2007**

(51) Int Cl.:
*B32B 7/02* (2006.01)      *G02B 5/30* (2006.01)

(86) International application number:
**PCT/JP2007/074103**

(87) International publication number:
**WO 2008/075619 (26.06.2008 Gazette 2008/26)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **19.12.2006  JP 2006341492**

(71) Applicant: **Zeon Corporation
Tokyo 100-8246 (JP)**

(72) Inventors:
• **YOSHITOMI, Yasumasa
Chiyoda-ku
Tokyo 100-8246 (JP)**

• **YOSHIHARA, Masanori
Chiyoda-ku
Tokyo 100-8246 (JP)**
• **ARAKAWA, Kohei
Chiyoda-ku
Tokyo 100-8246 (JP)**

(74) Representative: **Albrecht, Thomas et al
Kraus & Weisert
Patent- und Rechtsanwälte
Thomas-Wimmer-Ring 15
80539 München (DE)**

(54)  **OPTICAL FILM**

(57)    There is provided an optical film comprising : a multilayer base material film comprising an a-layer composed of a resin material (a) having a flexural modulus of 3 GPa to 4 GPa and a b-layer composed of a resin material (b) having a flexural modulus lower than the flexural modulus of the resin material (a), at least one of outer surfaces of the base material film being roughened by an emboss process or a blast process; and a functional layer, such as a hard coat layer and an anti-reflective layer, laminated on the roughened surface of the base material film. The optical film is used as a protective film for a liquid crystal display element, such as a polarizing plate.

EP 2 123 442 A1

## Description

## TECHNICAL FIELD

The present invention relates to an optical film suitable for use as a protective film for a liquid crystal display element, such as a polarizing plate.

## BACKGROUND ART

Polarizing plates used in liquid crystal display devices and the like are a laminate which comprises a polarizer and a protective film. As a polarizer, a film is commonly used that is obtained by making a polyvinyl alcohol film adsorb iodine or a dichroic dye and then stretching the resulting film in a boric acid solution. As a protective film, a tri-acetyl cellulose film is widely used. However, since a tri-acetyl cellulose film has a low moisture-proof property and a low gas-barrier property, it is likely that a polarizer is degraded and a polarizing plate is insufficient in durability, heat-resistance, mechanical strength and the like.

Incidentally, multilayer films are known that are obtained by laminating resin materials with different properties. As a multilayer film, for example, a multilayer thermoplastic resin sheet including at least one layer of amorphous polyolefin is disclosed in Patent literature 1. It is disclosed that this thermoplastic resin sheet is excellent in water vapor barrier property and transparency, and can be molded in a wide range of temperatures without adhere to a mold. In Patent literature 2, there is disclosed a laminated film that is composed of a polystyrene layer / an acrylonitrile butadiene styrene copolymer layer / a polystyrene layer. It is disclosed that this laminated film has a low cost and is excellent in transparency and impact resistance and has an excellent balance of tearing strength in a longitudinal direction or in a transverse direction.

Patent literature 1 : JP-A-H06-255053
Patent literature 2 : JP-A-H08-281882

It is suggested that a multilayer film is used as a polarizing-plate protective film. For example, in Patent literature 3, there is disclosed a polarizing-plate protective film that has a lower hygroscopicity than that of tri-acetyl cellulose and in which a resin layer having a positive photoelastic constant and a resin layer having a negative photoelastic constant are laminated and a photoelastic constant is lower than a specific value. It is disclosed that even when a display device using this polarizing plate protecting film is placed in a high temperature and high humidity environment, it does not suffer spotty display and decreased contrast. In Patent literature 4, there is disclosed a three-layer norbornene resin film that is composed of an intermediate layer and surface layers laminated on both sides thereof and in which the intermediate layer has a higher concentration of ultraviolet absorbing agent than that in the surface layers and a transmission factor for ultraviolet rays with a wavelength of 380 nm or less is not more than 40 %.
However, even when technologies are used that are disclosed in Patent literatures mentioned above and that are related to multilayer films, it is impossible to obtain a strong polarizing plate having an excellent surface hardness. Further improvement is required.

Patent literature 3 : JP-A-2000-206303
Patent literature 4 : JP-A-2002-249600

An optical film is proposed in which a base material film and a functional layer are laminated to provide antireflective and antiglare properties for the film. In such an optical film, a fringe caused by light interference between the base material film and the functional layer is likely to be observed, and this interference fringe causes the optical properties of the optical film to be degraded. Patent literature 5 discloses that a transparent polycarbonate resin laminate in which interference fringes are prevented can be obtained by controlling the surface roughness of the interface between a polycarbonate resin plate having a thickness of 1 to 10 mm and a coating material layer. However, since the transparent polycarbonate resin laminate is thick, it is not suitable as an optical member for a liquid crystal display device required to further reduce its thickness.

Patent literature 5 : JP-A-2001-080013

Incidentally, when a functional layer is laminated on a base material film that is produced by extrusion molding at an increased extrusion rate (a rate at which the produced film is wound), an interference fringe is more likely to occur. Thus, in the production of an optical film, it is necessary to carefully control the rate at which a base material film is extruded. Moreover, when the rate at which functional layers are formed is increased, an interference fringe is likewise more likely to occur. This restricts improvement in the productivity of an optical film.

**DISCLOSURE OF THE INVENTION**

**PROBLEMS TO BE RESOLVED BY THE INVENTION**

An object of the present invention is to provide an optical film that produces no interference fringe, that has a high pencil hardness and excellent flexibility and that is suitable for forming a polarizing plate.

**MEANS FOR SOLVING THE PROBLEMS**

As a result of thoroughly studying the above problem to overcome it, the inventors found that an optical film having no interference fringe, a high surface hardness and flexibility is obtained by coextruding a resin material (a) having a flexural modulus of 3 GPa to 4 GPa and a resin material (b) having a flexural modulus lower than that of the resin material (a), molding to obtain a multilayer film having an a-layer and a b-layer, then roughening an outer surface of the multilayer film through an embossing process or the like, and then laminating a functional layer on the roughened layer. Moreover, it was found that, by employing, as a base material film, the multilayer film having the surface roughened, even if the base material film is manufactured at higher extraction rate or a speed for formation of the functional layer is increased, the production of interference fringes are prevented. The present invention has been completed by further studies based on these findings.
Therefore, the present invention includes the followings:

(1) An optical film comprising : a multilayer base material film which comprises an a-layer composed of a resin material (a) having a flexural modulus of 3 GPa to 4 GPa and a b-layer composed of a resin material (b) having a flexural modulus lower than the flexural modulus of the resin material (a) and in which at least one of outer surfaces of the base material film is roughened; and a functional layer laminated on the roughened surface of the base material film.
(2) The optical film in which the base material film contains an ultraviolet absorbing agent.
(3) The optical film in which the functional layer is a hard coat layer, an anti-reflective layer and/or an anti-fouling layer.
(4) The optical film in which an arithmetic average height (Ra: JIS B 0601-2001) of the roughened surface is 0.05 $\mu$m or more but 0.5 $\mu$m or less.
(5) The optical film in which an average length (Rsm: JIS B 0601-2001) of a profile curve element of the roughened surface is 10 $\mu$m or more but 100 $\mu$m or less.
(6) The optical film in which a haze of the base material film is 1 % or more but 50 % or less.

(7) The optical film in which the a-layer has a thickness of 20 $\mu$m or more, the b-layer has a thickness of 60 $\mu$m or less and the base material film has a total thickness of 30 $\mu$m to 200 $\mu$m.
(8) The optical film further comprising an x-layer composed of a resin material (x) having an affinity for both the resin materials constituting the a-layer and the b-layer, the x-layer being disposed between the a-layer and the b-layer.
(9) The optical film in which the x-layer has a thickness of 1 $\mu$m to 20 $\mu$m.
(10) The optical film further including a c-layer composed of a resin material (c) having an affinity for both the resin materials constituting the a-layer and the b-layer, the c-layer being disposed other than between the a-layer and the b-layer.
(11) The optical film in which the c-layer has a thickness of 5 $\mu$m to 100 $\mu$m.
(12) The optical film in which a difference between the flexural modulus of the resin material (a) constituting the a-layer and the flexural modulus of the resin material (b) constituting the b-layer falls within a range of 0.2 GPa to 2.5 GPa.
(13) The optical film in which the base material film contains an elastomer particle.
(14) The optical film in which the elastomer particle has a number average particle diameter of 2.0 $\mu$m or less.

ADVANTAGEOUS EFFECT OF THE INVENTION

The optical film in the present invention produces no interference fringe and has a high surface hardness and flexibility. Moreover, when a multilayer film having a roughened surface is employed, an interference fringe is prevented from being produced even if the rate at which a base material film is extruded is increased or the rate at which functional layers are formed is increased.

## BEST MODE FOR CARRYING OUT THE INVENTION

The optical film of the present invention comprises a multilayer base material film having at least one outer surface roughened thereof and a functional layer laminated on the roughened surface of the base material film.

[Base material film]

The base material film comprises at least an a-layer and a b-layer.
A thermoplastic resin (a) that is used as a resin material (a) for the a-layer preferably has a high transparency. Specifically, a thermoplastic resin (a) preferably has a total light transmittance of 80 % or more.

Preferred examples of the thermoplastic resin (a) include a vinyl aromatic polymer, an acrylonitrile polymer, an acrylic resin and a vinyl alicyclic hydrocarbon polymer. Among them, a vinyl aromatic polymer, an acrylic resin and a vinyl alicyclic hydrocarbon polymer are preferable, and polystyrene, a styrene - maleic acid copolymer, poly methyl methacrylate and a vinyl alicyclic hydrocarbon polymer are more preferable. These thermoplastic resins (a) can be used alone or in combination of two or more.

The vinyl aromatic polymer includes : polystyrene; a copolymer of styrene and/or a styrene derivative and at least one of monomer selected from the group consisting of acrylonitrile, maleic anhydride, methyl methacrylate and butadiene; and a hydrogenated product (including an aromatic ring-hydrogenated product) of a copolymer of styrene and a conjugated diene, and the like. The styrene derivative includes 4-methylstyrene, 3-methylstyrene, 4-chlorostyrene, 4-methoxystyrene, 4-tert-butoxystyrene, $\alpha$-methylstyrene and the like.

Examples of the acrylic resin include a homopolymer of one type of (meth)acrylic acid ester and a copolymer of two or more types of (meth)acrylic acid esters or a copolymer of a (meth)acrylic acid ester and other monomer. In the present invention, the (meth)acrylic acid ester refers to an acrylic acid ester or a methacrylic acid ester.

The (meth)acrylic acid ester includes methyl acrylate, ethyl acrylate, propyl acrylate, isopropyl acrylate, butyl acrylate, isobutyl acrylate, t-butyl acrylate, hexyl acrylate, 2-ethylhexyl acrylate, 2-hydroxyethyl acrylate, polyethyleneglycol mono-acrylate, methyl methacrylate, ethyl methacrylate, propyl methacrylate, isopropyl methacrylate, butyl methacrylate, isobutyl methacrylate, t-butyl methacrylate, hexyl methacrylate, 2-ethylhexyl methacrylate, 2-hydroxyethyl methacrylate, polyethyleneglycol mono-methacrylate, and the like.

Examples of the acrylonitrile polymer include a homopolymer of acrylonitrile and a copolymer of acrylonitrile and a monomer copolymerizable therewith. The monomer copolymerizable with acrylonitrile includes an acrylic acid ester, a methacrylic acid ester, styrene, vinyl acetate, glycidyl methacrylate, and divinyl benzene; a polyethyleneglycol dimethacrylate in which the number of repeating units of ethyleneglycol is one to nine; and the like.

A vinyl alicyclic hydrocarbon polymer is a polymer that has repeating units derived from vinyl cycloalkane or vinyl cycloalkene. Examples of the vinyl alicyclic hydrocarbon polymer include : a polymer of a vinyl alicyclic hydrocarbon compound such as vinyl cycloalkane like vinyl cyclohexane or vinyl cycloalkene like vinyl cyclohexene and hydrogenated product thereof; and an aromatic ring-hydrogenated product of a polymer of a vinyl aromatic hydrocarbon compound such as styrene and $\alpha$-methylstyrene, and the like.

The vinyl alicyclic hydrocarbon polymer may be a random copolymer or a block copolymer comprising a monomer unit derived from a vinyl alicyclic hydrocarbon compound or a vinyl aromatic hydrocarbon compound and a monomer unit derived from other monomer. In the block copolymer, the number of polymer blocks is not limited; examples of such include a diblock copolymer, a triblock copolymer and a multiblock copolymer. The block copolymer may be a gradient block copolymer in which the proportion of monomer units is gradually varied.

A thermoplastic resin (b) that is used in a resin material (b) for the b-layer preferably has a high transparency. Specifically, a thermoplastic resin (b) preferably has a total light transmittance of 80 % or more.
Preferred examples of the thermoplastic resin (b) include an acrylic resin, an alicyclic structure containing polymer, a cellulose polymer, a polyester polymer, a polycarbonate polymer, a polysulphone polymer, a polyether sulphone polymer, a vinyl aromatic polymer, a polyolefin polymer, a polyvinyl alcohol polymer and a polyvinyl chloride polymer. These polymers can be used alone or in combination of two or more.

Since transparency or other properties are excellent, among them, an acrylic resin; an alicyclic structure containing polymer; a cellulose polymer such as cellulose diacetate, cellulose triacetate and cellulose acetate butyrate; and a polyester polymer such as polyethylene terephthalate, polybutylene terephthalate and polyethylene naphthalate are preferable. An acryl resin is more preferable in terms of hardness, transparency, dimension stability, lightness and the like.

Examples of the acrylic resin include : a homopolymer of a (meth)acrylic acid alkyl ester such as methyl acrylate, ethyl acrylate, methyl methacrylate, and ethyl methacrylate; a homopolymer of a (meth)acrylic acid alkyl ester in which a hydrogen atom in the alkyl group is substituted by a functional group such as OH group, COOH group and $NH_2$ group; and a copolymer of a vinyl monomer such as styrene, vinyl acetate, an $\alpha,\beta$-monoethylenic unsaturated carboxylic acid, vinyl toluene, $\alpha$-methyl styrene and maleic anhydride and a (meth)acrylic acid alkyl ester. Among these acrylic resins, an acrylic resin comprising poly methyl methacrylate and poly butyl methacrylate as monomer units is preferable.

The thermoplastic resins used in the α-layer and the b-layer preferably have a glass transition temperature of 80 ˚C or more, and more preferably 100 ˚C to 250 ˚C. When the glass transition temperature falls within this range, since the film is unlikely to be deformed or distorted even when used under a high temperature and high humidity environment, it is possible to obtain a base material film with excellent durability.

The molecular weight distribution (ratio of weight average molecular weight(Mw) / number average molecular weight (Mn)) of the thermoplastic resins used in the α-layer and the b-layer is not particularly limited; it falls within a range of usually 1.0 to 10.0, preferably 1.0 to 6.0, and more preferably 1.1 to 4.0. With the thermoplastic resin whose molecular weight distribution falls within this range, it is possible to obtain a base material film with an excellent balance between mechanical strength and moldability.

The resin material (a) is preferably 3 GPa to 4 GPa, and more preferably 3.0 GPa to 3.5 GPa in flexural modulus. When the flexural modulus of the resin material (a) falls within this range, it is possible to obtain a polarizing plate with high toughness and high surface hardness.

The resin material (b) has a flexural modulus lower than that of the resin material (a). Specifically, the resin material (b) is preferably 0.1 GPa to 3 GPa, and more preferably 1.5 GPa to 2.8 GPa in flexural modulus. When the flexural modulus of the resin material (b) falls within this range, it is possible to obtain a polarizing plate with high toughness and high surface hardness. It is generally said that the resin material with a low flexural modulus has high toughness and that the resin material with a high flexural modulus has a high surface hardness.

Using a load-deformation curve determined from a three-point bending test, the flexural modulus is calculated by the following equation:

$$E = L^3F / 4bh^3Y$$

in which E represents the flexural modulus, L represents the fulcrum-to-fulcrum distance, b represents the width of a specimen, h represents the height of the specimen, F represents a load in any scale reading-point on a first straight portion of the load-deformation curve, and Y represents deformation caused by the load F.

The difference between the flexural modulus of the resin material (a) and the flexural modulus of the resin material (b) is preferably 0.2 GPa to 2.5 GPa, more preferably 0.5 GPa to 2.0 GPa. When the difference between the flexural moduli is significantly small, the benefits of the present invention are reduced. When the difference between the flexural moduli is significantly large, it is difficult to form the base material film.

The resin material (a) and/or the resin material (b) may contain elastomer particles in order to adjust the flexural modulus. When elastomer particles are contained, the flexibility of the resin material is improved. The elastomer particles are preferably contained in the resin material (b) in the present invention.

The elastomer particle is composed of rubber-like polymer. Examples of the rubber-like polymer include an acrylic acid ester rubber-like polymer, a rubber-like polymer consisting mainly of butadiene, an ethylene - vinyl acetate copolymer and the like. Examples of the acrylic acid ester rubber-like polymer include a material consisting mainly of butyl acrylate, 2-ethylhexyl acrylate or the like. Among them, an acrylic acid ester rubber-like polymer consisting mainly of butyl acrylate and an acrylic acid ester rubber-like polymer consisting mainly of butadiene are preferable.

The elastomer particle may be a layered particle formed of two types of polymers. The typical example thereof includes an elastomer particle which has a core-shell structure comprising a rubber-like polymer layer obtained by grafting an alkyl acrylate such as butyl acrylate and styrene and a hard resin layer composed of a polymer of methyl methacrylate and/or a copolymer of methyl methacrylate and an alkyl acrylate.

The elastomer particle, when it is dispersed in thermoplastic resin, is usually 2.0 μm or less, preferably 0.1 μm to 1.0 μm, and more preferably 0.1 μm to 0.5 μm in number average particle diameter. Even when the primary particle diameter of the elastomer particle is small, if the number average particle diameter of the secondary particle formed such as by aggregation is large, the haze (the degree of fogging) of the base material film is increased and thus the light transmittance is reduced, with the result that it is not suitable for a display screen. When the number average particle diameter is too low, the flexibility tends to decrease.

In terms of a high balance among adherence, moisture permeability, toughness and surface hardness, examples of the combination of the resin material (a) and the resin material (b) include : a combination of the resin material (a) composed of a vinyl aromatic polymer and the resin material (b) composed of an alicyclic structure containing polymer; and a combination of the resin material (a) composed of an acrylic resin and the resin material (b) composed of a mixture of an acrylic resin and a rubber-like polymer. Among them, the following combinations are more preferable : a combination of the resin material (a) composed ofpolystyrene and the resin material (b) composed of a mixture of an acrylic resin and a rubber-like polymer; a combination of the resin material (a) composed of a styrene - maleic acid copolymer and the resin material (b) composed of a mixture of an acrylic resin and a rubber-like polymer; and a combination of the resin material (a) composed of poly methyl methacrylate and the resin material (b) composed of a mixture of an acrylic resin and a rubber-like polymer.

A compounding agent may be added to the resin material (a) and/or the resin material (b).
The compounding agent added is not particularly limited; examples thereof include : a lubricant agent; a layered crystal compound; an inorganic fine particle; stabilizers such as an antioxidizing agent, a thermal stabilizer, a light stabilizer, a weathering stabilizer, an ultraviolet absorbing agent and a near-infrared absorbing agent; a plasticizer; a coloring agent such as a dye and a pigment; an antistatic agent; and the like. The amount of the compounding agent can be determined as appropriate without departing from the scope of the present invention. In particular, a lubricant agent and an ultraviolet absorbing agent are preferably added to improve the flexibility and the weather resistance.

Examples of the lubricant agent include : an inorganic particle such as silicon dioxide, titanium dioxide, magnesium oxide, calcium carbonate, magnesium carbonate, barium sulfate and strontium sulfate; and an organic particle such as poly methyl acrylate, poly methyl methacrylate, polyacrylonitrile, polystyrene, cellulose acetate and cellulose acetate propionate. Particles constituting the lubricant agent are preferably organic particles.

Examples of the ultraviolet absorbing agent include an oxybenzophenone comound, a benzotriazole compound, a salicylic acid ester compound, a benzophenone ultraviolet absorbing agent, a benzotriazole ultraviolet absorbing agent, an acrylonitrile ultraviolet absorbing agent, a triazine compound, a nickel complex salt compound and inorganic power, which are known. Among them, 2,2'-metylenbis(4-(1,1,3,3-tetramethylbutyl)-6-(2H- benzotriazol-2-yl)phenol), 2-(2'-hydroxy-3'-tert-butyl-5'-methylphenyl)-5- chlorobenzotriazole, 2,4-di-tert-butyl-6-(5- chlorobenzotriazole-2-yl)phenol, 2-2'-dihydroxy-4,4'-dimethoxybenzophenone and 2,2',4,4'-tetrahydroxybenzophenone are preferable. And 2,2'-metylenbis (4-(1,1,3,3-tetramethylbutyl)-6-(2H-benzotriazol-2-yl)phenol) is especially preferable.

In the present invention, the ultraviolet absorbing agent is preferably contained in at least one of the resin material (a) and the resin material (b), and the ultraviolet absorbing agent is more preferably contained in one of the resin material (a) and the resin material (b).

The base material film used in the present invention comprises one or more a-layers and one or more b-layers. The thickness of the a-layer is usually 20 $\mu$m or more, preferably 20 $\mu$m to 100 $\mu$m, and more preferably 20 $\mu$m to 60 $\mu$m. When the a-layer is too thin, the surface hardness tends to decrease. In contrast, when the a-layer is too thick, the base material film is more likely to be brittle. The thickness of the b-layer is usually 60 $\mu$m or less, and preferably 10 $\mu$m to 50 $\mu$m. When the b-layer is too thin, the base material film is more likely to be brittle. In contrast, when the b-layer is too thick, the transparency of the base material film tends to decrease.

The base material film used in the present invention may further comprise an x-layer between the a-layer and the b-layer. The x-layer is an adhesive layer that can enhance adhesion between the a-layer and the b-layer. The flexural modulus of the x-layer is not particularly limited.
The x-layer can be composed of a resin material (x) that has an affinity for both resin materials constituting the a-layer and the b-layer. Examples of a thermoplastic resin used for the resin material (x) include a polyester urethan resin, a polyether urethane resin, a polyisocyanate resin, a polyolefin copolymer, a resin having a hydrocarbon structure as a main chain, a polyamide resin, an acrylic resin, a vinyl chloride - vinyl acetate copolymer, a chlorinated rubber, a cyclized rubber and modified materials obtained by introducing polar groups into these polymers. Among them, the polyolefin copolymer and its modified materials are preferably employed.

The polyolefin copolymer includes an ethylene - (meth)acrylic acid ester copolymer such as an ethylene - (meth)acrylic acid methyl copolymer and an ethylene - (meth)acrylic acid ethyl copolymer; a ternary copolymer obtained by copolymerizing ethylene and (meth)acrylic acid ester and further other monomer (propylene, maleic acid, vinyl acetate or the like) that can copolymerize; an ethylene - vinyl acetate copolymer; a ethylene - styrene copolymer; an ethylene - (meth)acrylic acid glycidyl ester copolymer and the like.

The resin having a hydrocarbon structure as a main chain includes a polymer having a polybutadiene structure or a polymer having a partially hydrogenated polybutadien structure. Specifically, polybutadiene, a hydrogenated polybutadien, a styrene - butadiene - styrene block copolymer (an SBS copolymer) and its hydrogenated copolymer (an SBES copolymer) are mentioned. Among them, a modified material of the hydrogenated styrene - butadiene - styrene block copolymer is preferable.

As the method for introducing a polar group into a polymer, oxidation, saponification, chlorination, chlorosulfonation and an addition of an unsaturated calboxylic acid are mentioned. Among them, an addition of an unsaturated calboxylic acid is preferably used. As a compound used for introducing the polar group, a calboxylic acid or its derivative is preferable. Examples thereof include : an unsaturated calboxylic acid such as acrylic acid, methacrylic acid, maleic acid and fumaric acid; and an unsaturated calboxylic acid derivatives, such as a halide, an amide, an imide, an anhydride, or an ester of an unsaturated calboxylic acid, such as maleyl chloride, maleimide, maleic anhydride and citraconic anhydride. Among them, a polymer which is modified with an unsaturated calboxylic acid or an unsaturated calboxylic anhydride is preferably used because it has excellent adherence. Among the unsaturated calboxylic acids and their anhydrides, acrylic acid, methacrylic acid, maleic acid and maleic anhydride are more preferable, and maleic acid and maleic anhydride are most preferable. These unsaturated calboxylic acids and their anhydrides can be use in combination of two or more.

The thickness of the x-layer is usually 1 $\mu$m to 20 $\mu$m, preferably 1 $\mu$m to 10 $\mu$m, and more preferably 2 $\mu$m to 7 $\mu$m. When the thickness of the x-layer is more than 20 $\mu$m, the surface hardness tends to decrease.

The base material film used in the present invention may comprise a c-layer which is disposed other than between a-layer and b-layer. Specifically, the base material film may comprise the c-layer on the outer surface side of the a-layer and/or the c-layer on the outer surface side of the b-layer. The base material film may comprise two c-layers that sandwich the a-layer and the b-layer.

The c-layer is for preventing the base material film from curling; it can be composed of a resin material (c) that has an affinity for both the resin material (a) constituting the a-layer and the resin material (b) for the b-layer. As the resin material (c), a thermoplastic resin can be used that has high transparency and that has an affinity for both the resin materials constituting the a-layer and the b-layer. As the resin material (c), a thermoplastic resin used for the resin material (a) or the resin material (b) may be employed. The c-layers on both sides that sandwich the a-layer and the b-layer are preferably composed of the same thermoplastic resin. The thickness of the c-layer is usually 5 $\mu$m to 100 $\mu$m, and preferably 10 $\mu$m to 50 $\mu$m.

When either the a-layer or the b-layer is composed of a resin material containing an ultraviolet absorbing agent, the c-layer is preferably disposed on the outer surface of the layer composed of the resin material containing the ultraviolet absorbing agent. When both the a-layer and the b-layer are composed of a resin material containing an ultraviolet absorbing agent, the c-layers are preferably disposed on the outer surfaces of both the a-layer and the b-layer.

The resin material (x) and/or the resin material (c) may contain the elastomer particles or the compounding agents that can be added to the resin material (a) or the resin material (b).

A multilayer film in which the a-layer and the b-layer and further the x-layer and/or the c-layer are laminated is preferably formed by coextrusion. Among coextrusion methods, a coextrusion T die method, a coextrusion inflation method and a coextrusion lamination method are preferable in terms of production efficiency and prevention of a volatile component such as solvent from being left in the film; the coextrusion T die method is most preferable.

For the coextrusion T die method, there are a field block mode and a multi manifold mode; since it is possible to reduce data spread in the thickness of each layer, the multi manifold mode is more preferable.

In the coextrusion T die method, the temperature of molten resin is preferably set at a temperature 80 ˚C to 180 ˚C higher than the glass transition temperature (Tg), more preferably at a temperature 100 ˚C to 150 ˚C higher than the glass transition temperature. If the temperature of molten resin is extremely low, the fluidity of the resin material is likely to be insufficient, whereas, if the temperature of molten resin is extremely high, the resin material is likely to be degraded.

The temperatures of portions in an extruder used in the coextrusion T die method are preferably selected as appropriate according to the thermoplastic resin used. Specifically, the temperatures of a resin inlet, an outlet of the extruder and a die are preferably set at temperatures of Tg ˚C to (Tg + 100) ˚C, (Tg + 50) ˚C to (Tg + 170) ˚C and (Tg + 50) ˚C to (Tg + 170) ˚C, respectively. Here, the symbol Tg represents the glass transition temperature of resin extruded.

The sheet-shaped molten resin extruded from the dies is pinned onto a cooling drum. The method for pinning the molten resin onto the cooling drum is not particularly limited; examples thereof include an air knife method, a vacuum box method and an electrostatically pinning method.

The number of cooling drums is not particularly limited, and it is usually two or more. For example, the cooling drums are arranged in the form of a line, the letter "Z" and the letter "L", and the arrangement thereof is not particularly limited. Moreover, passing method of the molted resin extruded from the dies through the cooling drum is not particularly limited. In the present invention, the degree of adherence of the extruded sheet-shaped thermoplastic resin to the cooling drum varies depending on the temperature of the cooling drum. As the temperature of the cooling drum is increased, the degree of adherence is increased; when the temperature is excessively increased, it is likely that the sheet-shaped thermoplastic resin does not come off the cooling drum and is thus twined around the drum. Thus, when the lower one of the grass transition temperatures of the thermoplastic resins extruded from the mold is "Tg", the temperature of the cooling drum is preferably set at (Tg + 30) ˚C or less, more preferably at (Tg - 5) ˚C to (Tg - 45) ˚C. In this way, it is possible to prevent failures such as sliding and scratches.

One way (1) to reduce the amount of solvent left in the film is to reduce residual solvent in the thermoplastic resin itself serving as a raw material; another way (2) is to preliminarily dry the resin material before it is molded into the film. The preliminarily dry includes, for example, a method in which the resin material is shaped in the form of pellets and then the preliminary drying is performed by use of a hot-air dryer or the like. The drying temperature is preferably 100 ˚C or more, and the drying period is preferably two hours or more. With the preliminary drying, it is possible to reduce residual solvent and furthermore prevent the resin material extruded from foaming.

In the film obtained by coextrusion, a linear recess and a linear projection (so-called a die line) of unintended sizes may be formed at an unintended position. Preferably, the film used in the present invention is substantially free from this die line. That the film is substantially free from the die line means that, if a linear recess and a linear projection are formed, the depth of the linear recess is less than 50 nm or its width is more than 500 nm and the height of the liner projection is less than 50 nm or its width is more than 500 nm, and more preferably, the depth of the linear recess is less than 30 nm or its width is more than 700 nm and the height of the liner projection is less than 30 nm or its width is more than 700 nm. When the film is formed to be substantially free from the die line, it is possible to reduce unintended refraction caused by the die line and to prevent light interference and light leak from being produced, with the result that the optical performance can be enhanced.

The film that is substantially free from the die line can be obtained, for example, in the T die extrusion method, such as by: decreasing the surface roughness of a rip portion of the dies; plating a rip end portion with chromium, nickel, titanium or the like; thermal spraying ceramic onto the rip end portion; depositing a coating film of TiN, TiAlN, TiC, CrN, DLC (diamond-like carbon) or the like on the inner surface of the rip by PVD (physical vapor deposition); adjusting the temperature distribution and the air flow around the molten resin immediately extruded from the dies so that they are made uniform; or selecting, as resins for forming the layer of the thermoplastic resin, resins having melt flow rates substantially similar to each other. It can be obtained, in a cast molding method, such as by: using a cast support film with low surface roughness; reducing the surface roughness of a coater; or adjusting, when a coated layer is dried, the temperature distribution, the drying temperature and the drying period.

Moreover, in the T die extrusion method, the formation of the die line can be prevented such as by: removing substances (for example, burns and dirt) adhered to the die rip; enhancing the mold release of the die rip; making uniform the wettability of the entire surface of the die rip; reducing the amount of resin powder; reducing the amount of oxygen dissolved in the resin pellets; or disposing a polymer filter within a melt extruder.

The base material film used in the present invention has at least one outer surface roughened. In the base material film, the arithmetic average height (Ra) of the roughened surface is preferably 0.05 $\mu$m or more but 0.5 $\mu$m or less, more preferably 0.1 $\mu$m or more but 0.3 $\mu$m or less. The average length (Rsm) of a profile curve element is preferably 10 $\mu$m or more but 100 $\mu$m or less, more preferably 30 $\mu$m or more but 70 $\mu$m or less.

The average length (Rsm) of the profile curve element refers to an average value obtained by the following procedure: a profile curve (a roughness curve) obtained, from a cross-sectional curve to be measured, by interrupting long wavelength components with a high-pass filter having a cut off value $\lambda$c is determined, then a reference length (L) is selected with respect to the average line of the roughness curve, and the average value of the length (Xsi) between the adjacent peak and trough on the reference length (L) is obtained. Ra refers to an average value of the absolute values of the heights (the distance from the average line to the measured curve) on the reference length of the roughness curve obtained by the above-described method. These comply with "JIS B 0601-2001".

The roughening is performed by producing raised portions (embossed portions) or recesses (dents) in a surface with an external force. Examples of such a method include a nip forming method using an emboss roll, a sandwich laminating method using a film with a roughened surface, and a blast method. Among them, the nip forming method is preferably used. In the nip forming method, the film is preferably sandwiched and pressed between a mirror surface roll and a forming roll.

The forming roll surface is a roughened surface, and the shape of the roughened surface is transferred to the film. The arithmetic average height (Ra) of the forming roll surface is preferably 0.01 $\mu$m or more but 2.0 $\mu$m or less, more preferably 0.1 $\mu$m or more but 1.5 $\mu$m or less. In the forming roll surface, the average length (Rsm) of the profile curve element is preferably 10 $\mu$m or more but 100 $\mu$m or less, more preferably 30 $\mu$m or more but 70 $\mu$m or less.

The surface of each roll is made of metal, rubber, resin or the like. Preferably, the hardness of the forming roll is equal to or higher than that of the mirror surface roll. Instead of changing the material of the surface of the mirror surface roll, a resin film formed of a material that has surface smoothness equivalent to that of the mirror surface roll and that is softer than the forming roll may be inserted between the film to be roughened and the mirror surface roll.

Preferably, the temperatures of the mirror surface roll and the forming roll can be independently adjusted. The temperature of the mirror surface roll is usually adjusted to 40 ˚C or more but 150 ˚C or less, preferably 60 ˚C or more but 110 ˚C or less. The temperature of the forming roll is typically adjusted to 100 ˚C or more but 200 ˚C or less, preferably 110 ˚C or more but 180 ˚C or less.

The total thickness of the base material film used in the present invention typically falls within a range of 30 $\mu$m to 200 $\mu$m, preferably a range of 40 $\mu$m to 150 $\mu$m and most preferably a range of 50 $\mu$m to 100 $\mu$m. The base material film preferably has a haze of 1 % or more but 50 % or less, more preferably a haze of 3 % or more but 40 % or less.

The roughened surface of the base material film used in the present invention may be subjected to surface treatment so that the adherence to a functional layer is enhanced. The surface treatment is done such as by an energy rays irradiation treatment or a chemical treatment. The energy rays irradiation treatment includes a corona discharge treatment, a plasma treatment, an electron rays irradiation treatment, an ultraviolet rays irradiation treatment and the like. In terms of treatment efficiency or the like, the corona discharge treatment and the plasma treatment are preferable, and the corona discharge treatment is most preferable. The chemical treatment is performed such as by immersing the surface in an oxidizing agent solution such as potassium dichromate solution or concentrated sulfuric acid and then sufficiently washing it with water. Although the chemical treatment is effectively performed when the surface is shivered while immersed, prolonged chemical treatment disadvantageously causes the surface to be dissolved and its transparency to be decreased. Thus, it is necessary to adjust the treatment period or the like according to the reactivity, the concentration and the like of the chemical used.

[Functional layer]

In the optical film of the present invention, a functional layer is laminated on the roughened surface of the base material film. Examples of the functional layer include a hard coat layer, an anti-reflective layer an anti-fouling layer and the like.

(Hard coat layer)

The hard coat layer is a layer that has the function of enhancing surface hardness. In a pencil hardness test (where a glass plate is used as a test plate) complying with JIS K5600-5-4, the hard coat layer preferably has a hardness of "H" or harder. The optical film in which such a hard coat layer is incorporated preferably has a pencil hardness of "4H" or harder.

As a material (a hard coat material) for forming the hard coat layer, a material that is hardened by heat or light is available. Examples of such a material include : organic hard coat materials such as organosilicon materials, melamine materials, epoxy materials, acrylic materials and urethane acrylate materials; and inorganic hard coat materials such as silicon dioxide. Among them, since adhesion is satisfactory and productivity is excellent, urethane acrylate hard coat materials and multifunctional acrylate hard coat materials are preferable.

The hard coat layer may contain various types of fillers as desired in order to adjust the refractive index, enhance the flexural modulus, stabilize the volume constriction and enhance the heat-resistance, the antistatic properties, antiglare properties and the like. Moreover, the hard coat layer may contain additives such as an antioxidizing agent, an ultraviolet absorbing agent, a light stabilizer, an antistatic agent, a leveling agent and a deforming agent.

(Anti-reflective layer)

The anti-reflective layer is a layer that prevents ambient light from being reflected. The anti-reflective layer is laminated directly or through other layer such as the hard coat layer on the surface, that is a surface exposed to the outside, of the optical film. When the angle of incidence of light is five degrees and the wavelength of light is 430 nm to 700 nm, the optical film preferably has a reflectivity of 2.0 % or less. The reflectivity at the wavelength of 550 nm is preferably 1.0 % or less.

The thickness of the anti-reflective layer preferably falls within a range of 0.01 $\mu$m to 1 $\mu$m, more preferably a range of 0.02 $\mu$m to 0.5 $\mu$m. Examples of the anti-reflective layer include : a layer formed with a low-refractive index layer having a refractive index lower than that of a layer (such as a protective layer or the hard coat layer) on which the anti-reflective layer is laminated, specifically a refractive index of 1.30 to 1.45; and a layer in which a plurality of a thin low-refractive index layer composed of an inorganic compound and a thin high-refractive index layer composed of an inorganic compound are alternatively laminated.

The material used for forming the low-refractive index layer is not particularly limited as long it has a low refractive index. Examples of such a material include : an organic material such as an ultraviolet curable acrylic resin; a hybrid material in which inorganic particles such as colloidal silica are dispersed in resin; and a sol-gel material formed of metallic alkoxide such as tetraethoxysilane; and the like. These materials used for forming the low-refractive index layer may be polymers, monomers or oligomers serving as precursors for polymers. In order to provide anti-fouling property, each material preferably contains a compound having a fluorine group.

As the above-mentioned sol-gel materials, a sol-gel material having a fluorine group is preferably employed. Examples of the sol-gel material having a fluorine group include fluoroalkyl alkoxysilane. The fluoroalkyl alkoxysilane is a compound that is represented by, for example, $CF_3(CF_2)_nCH_2CH_2Si(OR)_3$, where R represents an alkyl group having 1 to 5 carbon atoms, and n represents an integer from 0 to 12. Specific examples of the fluoroalkyl alkoxysilane include trifluoropropyl trimethoxysilane, trifluoropropyl triethoxysilane, tridecafluorooctyl trimethoxysilane, trideca fluorooctyl triethoxysilane, heptadecafluorodecyl trimethoxysilane, and heptadecafluorodecyl triethoxysilane. Among them, the compound in which n in the above-mentioned chemical formula is an integer from 2 to 6 is preferable.

The low-refractive index layer can be formed of a hardened material of a thermosetting fluorine-containing compound or an ionization-radiation-setting fluorine-containing compound. Preferably, the hardened material has a dynamic friction coefficient of 0.03 to 0.15 and a contact angle of 90 to 120 degrees with respect to water. Examples of the curable fluorine-containing compound include a perfluoroalkyl group-containing silane compound such as (heptadecafluoro-1,1,2,2-tetradecyl) triethoxysilane and the like, and a fluorine-containing polymer having a cross-linkable functional group.

The fluorine-containing polymer having a cross-linkable functional group can be obtained by copolymerizing a fluorine-containing monomer and a cross-linkable group-containing monomer, or by copolymerizing a fluorine-containing monomer and a functional group-containing monomer and then adding a cross-linkable group-containing compound to the functional group in the polymer.

Examples of the fluorine-containing monomer include : fluoroolefins such as fluoroethylene, vinylidene fluoride, tetrafluoroethylene, hexa fluoroethylene, hexafluoropropylene and perfluoro- 2,2-dimethyl-1,3-dioxole; and partially or fully fluorinated alkylester derivatives and fully or partially fluorinated vinyl ethers of (meth)acrylic acid such as "Biscoat 6FM" made by Osaka Organic Chemical Industry Ltd. and "M-2020" made by Daikin Industries Ltd.

Examples of the cross-linkable group-containing monomer or the cross-linkable group-containing compound include : a monomer having a glycidyl group such as glycidyl acrylate and glycidyl methacrylate; a monomer having a carboxylic group such as acrylic acid and methacrylic acid; a monomer having a hydroxyl group such as a hydroxyalkyl acrylate and a hydroxyalkyl methacrylate; methylol acylate and methylol metacylate; a monomer having a vinyl group such as allyl acrylate and allyl mathacrylate; a monomer having an amino group; and a monomer having a sulfonic acid group.

Since scratch-resistance is enhanced, as the material for forming the low-refractive index layer, a material containing a sol in which fine particles such as silica, alumina, titania, zirconia or magnesium fluoride are dispersed in an alcohol solvent can be used. The fine articles preferably has a lower refractive index in terms of anti-reflectivity. Such fine articles may be hollow; hollow silica fine particles are more preferable. The average particle diameter of the hollow fine particles preferably falls within a range of 5 nm to 2000 nm, more preferably a range of 20 nm to 100 nm. Here, the average particle diameter refers to a number average particle diameter determined by transmission electron microscopy.

(Anti-fouling layer)

The anti-fouling layer is a layer that provides water repellency, oil repellency, sweat resistance, dirt resistance and the like. As the material for forming the anti-fouling layer, a fluorine-containing organic compound is preferable. Examples of the fluorine-containing organic compound include fluorocarbon, perfluorosilane and their polymer compounds. Examples of a method for forming the anti-fouling layer include physical vapor deposition such as vapor deposition or spattering; chemical vapor deposition; and wet coating. The average thickness of the anti-fouling layer preferably falls within a range of 1 nm to 50 nm, more preferably a range of 3 nm to 35 nm.

The functional layer may be a layer other than layers described above, which is generally employed in an optical film, such as an antiglare layer, a gas-barrier layer, a transparent anti-static layer, a primer layer, an electromagnetic wave shielding layer and a basecoat layer.

A method for laminating the functional layer on the roughened layer of the base material film is not particularly limited; a typical method for forming each functional layer is preferably employed. Examples of such a method include : a dip coating method, an air knife coating method, a curtain coating method, a roller coating method, a wire bar coating method and a gravure coating method; physical vapor deposition; and chemical vapor deposition.

The optical film in the present invention can be used as a surface protective film for a display device such as a liquid crystal display device (LCD), a plasma display panel (PDP), an electro luminescent display (ELD), a cathode ray tube (CRT), a field emission display (FED), an electronic paper and a touch panel by being directly attached thereto, or by being substituted for a surface member incorporated into a display device, such as a polarizing-plate protective film or a front plate. In particular, the optical film in the present invention is preferably used as the polarizing-plate protective film.

The optical film in the present invention is attached, as the polarizing-plate protective film, to one or both sides of a polarizer, with the result that the polarizing-plate is obtained. Before the optical film is attached to the polarizer, the side on which the optical film is attached is preferably subjected to a process for facilitating adhesion such as a saponification process, a corona treatment, a priming treatment and anchor coating treatment. The optical film may be attached to the polarizer by adhesive agent. The adhesive agent used may be either a conventionally known adhesive agent or a cationic light curable adhesive agent.

The polarizer to which the optical film of the present invention is attached is not particularly limited; examples of the polarizer include: one obtained by adsorbing iodine or a dichroic dye in a polyvinyl alcohol film and then uniaxially stretching it in boracic acid; and one obtained by adsorbing iodine or a dichroic dye in a polyvinyl alcohol film, stretching it and then modifying part of a polyvinyl alcohol unit within a molecular chain into a poly vinylene unit. As the polarizer, a polarizer such as a grid polarizer, a multilayer polarizer and a cholesteric liquid crystal polarizer can be used that has the function of separating polarized light into reflected light and transmitted light. Among them, a polarizer comprising polyvinyl alcohol is preferable. The degree of polarization of the polarizer is preferably not less than 98 %, more preferably not less than 99 %. The thickness of the polarizer (the average thickness) preferably falls within a range of 5 $\mu$m to 80 $\mu$m.

When the optical film of the present invention is attached to one side of the polarizer, a protective film conventionally used for a polarizing plate is attached to the other side of the polarizer. Examples of the protective film include a polycarbonate resin film, a polyether sulfone resin film, a polyethylene terephthalate resin film, a polyimide resin film, a polymetyl methacrylate resin film, a poly sulfone resin film, a polyarylate resin film, a polyethylene resin film, a polystyrene resin film, a polyvinylchloride resin film, a cellulose ester film and an alicyclic olefin polymer film. The protective film may be attached to the polarizer by adhesive agent. The adhesive agent used may be either a conventionally known adhesive agent or a cationic light curable adhesive agent.

Using of the polarizing plate obtained can produce a liquid crystal display device. The liquid crystal display device is typically composed of a light source, an incident-side polarizing plate, a liquid crystal cell and an outgoing-side polarizing plate, which are arranged in this order. The polarizing plate can be disposed on the outgoing side that is a viewing side and/or the incident side that is a light source side of the display device; the polarizing plate of the present invention is preferably disposed on at least the outgoing-side.

The optical film of the present invention is preferably disposed on the outgoing side of the outgoing-side polarizing plate. Moreover, the a-layer of the base material film, which is comprised in the optical film, is preferably disposed closer to the viewing side than the b-layer

The liquid crystal display device of the present invention may further comprise a phase-difference plate, a brightness-enhancing film, a light guide plate, a light diffusion plate, a light diffusion sheet, a light gathering sheet and a reflective plate.

EXAMPLES

Examples and Comparative examples are shown to describe the present invention in further detail. "part" and "%" are based on mass unless otherwise indicated.

The base material film and the optical film obtained in EXAMPLES and COMPARATIVE EXAMPLES were evaluated by the following method.

<Flexural modulus>

The flexural modulus was measured according to "JIS K 7171" by use of a tensile testing machine "Autograph AG-100k NIS" made by Shimadzu Corporation.

<Melt flow rate>

The melt flow rate was measured according to "JIS K 7210" on conditions "S" that the temperature is 280 °C and the load is 2.16 kgf by use of a melt indexer F-B01 made by Toyo Seiki Seisaku-syo, Ltd.

<Thickness of each layer>

The base material film was embedded in epoxy resin, and it was sliced by use of a microtome ("RUB-2100" made by Yamato Kohki Industrial Co., Ltd.), and then its cross-section was observed and measured by scanning electron microscopy.

<Haze>

The haze was measured by use of a turbidimeter (the product name "NDM 2000" made by Nippon denshoku industries Co., Ltd.).

<Ra and Rsm>

The Ra and Rsm were measured according to "JIS B 0601 : = 2001" by use of a color 3D laser microscope (the product name "VK-9500" made by Keyence Corporation.

<Observation of interference fringes on polarizing plate>

On the ceiling of a room covered with a light opaque black cloth, six three-wavelength fluorescent lights ("National FL20SS ENW/18" made by Panasonic Corporation) were arranged. In a location 1.5 meters below the fluorescent lights, interference fringes were observed by shining light from the fluorescent lights onto the surface of the optical film from the side of an observer, and were evaluated according to the following criteria.

○: No interference fringes were observed
△: Interference fringes were slightly observed
×: Interference fringes were noticeably observed

<Pencil Hardness>

According to "JIS K 5600-5-4" except that the load is set at 500 g, a scratch of about 5 mm was formed in five locations in the surface of the optical film (the surface of the anti-reflective layer) with a "4H" pencil, and the appearance of the abrasion was checked. A glass plate was used as a testing board on which the film was placed.

○: The number of abrasions was zero ×:

The number of abrasions was one or more

<Flexibility>

The optical film was punched out into 1 cm × 5 cm pieces of film. The film piece obtained was wound around a steel bar being 3 mmΦ, and whether or not the film piece was broken around the bar was checked. Ten film pieces were checked, and the flexibility was evaluated using the following criteria corresponding to the number of unbroken film pieces.

○: The number of broken film pieces was zero
△: The number of broken film pieces was one
×: The number of broken film pieces was two or more

<Elastomer particles>

Into a reactor equipped with a stirring machine and a condenser were charged 6860 ml of distilled water and 20 g of sodium dioctyl sulfosuccinate serving as an emulsifier, and they were heated to a temperature of 75 ˚C under a nitrogen atmosphere while being stirred, with the result that the distilled water containing the emulsifier was obtained. To the distilled water containing the emulsifier was added a mixed solution composed of 220 g of methyl methacrylate (hereinafter, referred to as "MMA"), 33 g of n-butyl acrylate, 0.8 g of allyl methacrylate (hereinafter, referred to as "ALMA") and 0.2 g of diisopropyl benzene hydroperoxide (hereinafter, referred to as "PBP"), and they were emulsion-polymerized by being maintained at a temperature of 80 ˚C for 15 minutes, with the result that core particles were obtained.
To this reaction solution was continuously dropped for one hour a mixed solution composed of 1270 g of n-butyl acrylate, 320 g of styrene, 20 g of diethylene glycol acrylate, 13.0 g of allyl methacrylate, and 1.6 g of diisopropyl benzene hydroperoxide. After completion of the drop, the resulting solution was polymerized by being maintained for further 40 minutes to be coated.
To the reaction solution polymerized to be coated were added a mixed solution composed of 340 g of methyl methacrylate, 2.0 g of n-butyl acrylate, 0.3 g of diisopropyl benzene hydroperoxide and 0.1 g of n-octyl mercaptan and were further added a mixed solution composed of 340 g of methyl methacrylate, 2.0 g of n-butyl acrylate, 0.3 g of diisopropyl benzene hydroperoxide and 1.0 g of n-octyl mercaptan. After completion of the addition, the resulting solution was polymerized by increasing the temperature to 95 ˚C and maintaining it for 30 minutes so that it was coated, with the result that latex of multilayer acryl rubber particles was obtained. A small amount of the latex was batched off, and its average particle diameter as measured by absorbance detection was found to be 0.2 μm.
The latex obtained was charged into 0.5 % of aluminum chloride aqueous solution and thus the polymer was coagulated, and it was washed with hot water five times and then dried, with the result that the elastomer particles were obtained.

(Resin Material)

Resin material (a1) : polymethyl methacrylate resin comprising 10 % by weight of maleic anhydride unit having melt flow rate of 16g / 10 minutes at 280 ˚C and 2.16 kgf, glass transition temperature of 120 ˚C, and flexural modulus of 3.8 GPa;
Resin material (a2) : styrene resin having melt flow rate of 18g / 10 minutes at 280 ˚C and 2.16 kgf, glass transition temperature of 125 ˚C, and flexural modulus of 3.7 GPa;
Resin material (b1) : a material obtained by meting and kneading, with a twin screw extruder, 80 parts by weight of polymethyl methacrylate resin and 20 parts by weight of the elastomer particles at a temperature of 260 ˚C, which has melt flow rate of 20g / 10 minutes at 280 ˚C and 2.16 kgf, glass transition temperature of 102 ˚C, and flexural modulus of 2.5 GPa;
Resin material (b2) : a material obtained by adding 2 % by weight of an ultraviolet absorbing agent to the resin material (b1) which has melt flow rate of 20g / 10 minutes at 280 ˚C and 2.16 kgf, glass transition temperature of 108 ˚C, and flexural modulus of 2.5 GPa.

(Production of Film 1)

The resin material (a1) was charged into a single screw extruder equipped with a double flight type screw, and the molten resin was fed, into one of multi manifold dies for producing a two-kind and two-layer film, at an extruder outlet temperature of 260 ˚C through a leaf disc-shaped polymer filter having a mesh size of 10 $\mu$m. Simultaneously, the resin material (b1) was charged into a single screw extruder equipped with a double flight type screw, and the molten resin was fed into the other of the multi manifold dies at an extruder outlet temperature of 260 ˚C through a leaf disc-shaped polymer filter having a mesh size of 10 $\mu$m. The surface roughness Ra of the dies lip of the multi manifold dies was 0.1 $\mu$m.
Thereafter, the resin material (a1) and the resin material (b1) in a molten state were coextruded from the multi manifold die at a temperature of 260 ˚C, were cast onto a cooling roll maintained at a temperature of 130 ˚C and were then passed between cooling rolls maintained at a temperature of 50 ˚C , with the result that a film 1 was obtained which had a two layer structure composed of a b1-layer (20 $\mu$m) composed of the resin material (b1) and an a1-layer (60 $\mu$m) composed of the resin material (a1) and which had a width of 600 mm and a thickness of 80 $\mu$m. In the film 1, Ra was less than 0.015 $\mu$m and the haze was 1.5 %.

(Production of Film 2)

The resin material (a1) and the resin material (b1) were fed into a multi manifold die for producing a two-kind and three-layer film, were coextruded from the multi manifold die at a temperature of 260 ˚C, were cast onto a cooling roll maintained at a temperature of 130 ˚C and were then passed between cooling rolls maintained at a temperature of 50 ˚C, with the result that a film 2 was obtained which had a three layer structure composed of a b1-layer (10 $\mu$m) composed of the resin material (b1), an al-layer(60 $\mu$m) composed of the resin material (a1) and a bl-layer (10 $\mu$m) composed of the resin material (b1) and which had a width of 600 mm and a thickness of 80 $\mu$m. The surface roughness Ra of the dies lip was 0.1 $\mu$m. In the film 2, Ra was less than 0.015 $\mu$m and the haze was 3.0 %.

(Production of Film 3)

The resin material (b2) was charged into a single screw extruder equipped with a leaf disc-shaped polymer filter having a mesh size of 10 $\mu$m and a double flight type screw and was fed, into a multi manifold die for producing a three kind and three layer film, at an extruder outlet temperature of 260 ˚C through the leaf disc-shaped polymer filter having a mesh size of 10 $\mu$m.
Simultaneously, the resin material (a2) was charged into a single screw extruder equipped with a double flight type screw and was fed into the multi manifold die at an extruder outlet temperature of 260 ˚C through the leaf disc-shaped polymer filter having a mesh size of 10 $\mu$m.
Moreover, the resin material (b1) was charged into a single screw extruder equipped with a double flight type screw and was fed into the multi manifold die at an extruder outlet temperature of 260 ˚C through the leaf disc-shaped polymer filter having a mesh size of 10 $\mu$m. The surface roughness Ra of the dies lip of the multi manifold die was 0.1 $\mu$m.
Thereafter, the resin material (a2), the resin material (b2) and the resin material (b1) in a molten state were coextruded from the multi manifold die at a temperature of 260 ˚C, were cast onto a cooling roll maintained at a temperature of 130 ˚C and were then passed between cooling rolls maintained at a temperature of 50 ˚C, with the result that a film 3 was obtained by the coextrusion which had a three layer structure composed of an a2-layer (40 $\mu$m) composed of the resin material (a2), a b2-layer (20 $\mu$m) composed of the resin material (b2) and a b1-layer (20 $\mu$m) composed of the resin material (b1) and which had a width of 600 mm and a thickness of 80 $\mu$m. In the film 3, Ra was less than 0.01 $\mu$m and the haze was 2.0 %.

(Production of Film 4)

A film molding device for use in single-layer extrusion molding was prepared, and the resin material (b1) was charged into the single screw extruder equipped with a double flight type screw and was fed, into a manifold die at a temperature of 260 ˚C with an extruder outlet temperature being 260 ˚C through the leaf disc-shaped polymer filter having a mesh size of 10 $\mu$m. The resin material (b1) was extruded from the die at a temperature of 260 ˚C into a film shape. The film-shaped molten resin was cast onto a cooling roll maintained at a temperature of 130 ˚C and was then passed between two cooling rolls maintained at a temperature of 50 ˚C, with the result that a protective film 4 was obtained by the extrusion which had a width of 600 mm and a thickness of 80 $\mu$m. In the film 4, Ra was less than 0.01

μm and the haze was 4.0 %.

(Production of Film 5)

With the same manner as the production of the film 4 except that the resin material (a1) was used instead of the resin material (b1), a protective film 5 with a width of 600 mm and a thickness of 80 μm was obtained by extrusion. In the film 5, Ra was less than 0.01 μm and the haze was 0.5 %.

(Production of Base Material Film 1)

The film 1 was passed through a nip between a 100 μm thick hard chrome-plated metallic mirror surface roll having a surface temperature of 110 °C and a ceramic forming roll that had a rough surface whose Ra was 1.2 μm and Rsm was 50 μm and that had a surface temperature of 150 °C to be pressed at a linear pressure of 100 kN/m. The film 1 was wound at a roll speed of 10 m/minute and a surface of the a1-layer of the film 1 was roughened (embossed), with the result that the base material film 1 was obtained.
In the embossed surface of the base material film 1, Ra was 0.18 μm and Rsm was 50 μm. The haze of the base material film 1 was 14.9 %.

(Production of Base Material Film 2)

The film 1 and a thermoplastic polyimide resin film ("AURUM Film" (product number "PL450C")) made by Mitsui Chemicals, Inc. were passed between a 100 μm thick hard chrome-plated metallic mirror surface roll having a surface temperature of 110 °C and a ceramic forming roll that had a rough surface whose Ra was 1.1 μm and Rsm was 50 μm and that had a surface temperature of 180 °C so that the polyimide resin film came in contact with the mirror surface roll to be pressed at a linear pressure of 200 kN/m. They were wound at a roll speed of 20 m/minute and a surface of the a1-layer of the film 1 was roughened (embossed), with the result that the base material film 2 was obtained.
In the embossed surface of the base material film 2, Ra was 0.23 μm and Rsm was 50 μm. The haze of the base material film 2 was 19.2 %.

(Production of Base Material Film 3)

The film 1 and a thermoplastic polyimide resin film ("AURUM Film" (product number "PL450C") made by Mitsui Chemicals, Inc. were passed between a 100 μm thick hard chrome-plated metallic mirror surface roll having a surface temperature of 70 °C and a ceramic forming roll that had a rough surface whose Ra was 1.3 μm and Rsm was 50 μm and that had a surface temperature of 180 °C so that the polyimide resin film came in contact with the mirror surface roll, and was pressed at a linear pressure of 400 kN/m. They were wound at a roll speed of 30 m/minute and a surface of the a1-layer of the film 1 was roughened (embossed), with the result that the base material film 3 was obtained. In the embossed surface of the base material film 3, Ra was 0.26 μm and Rsm was 50 μm. The haze of the base material film 3 was 21.4 %.

(Production of Base Material Film 4)

With the same manner as the production of the base material film 1 except that the film 2 was used instead of the film 1, a surface of the b1-layer of the film 2 was roughened (embossed), and thus the base material film 4 was obtained.
In the embossed surface of the base material film 4, Ra was 0.25 μm and Rsm was 50 μm. The haze of the base material film 4 was 20.0 %.

(Production of Base Material Film 5)

With the same manner as the production of the base material film 1 except that the film 3 was used instead of the film 1, a surface of the a2-layer (the styrene resin layer) of the film 3 was roughened (embossed), and thus the base material film 5 was obtained.
In the embossed surface of the base material film 5, Ra was 0.20 μm and Rsm was 50 μm. The haze of the base material film 5 was 18.0 %.

(Production of Base Material Film 6)

With the same manner as the production of the base material film 1 except that the film 4 was used instead of the film 1, a surface of the film 4 was roughened (embossed), and thus the base material film 6 was obtained.
In the embossed surface of the base material film 6, Ra was 0.25 $\mu$m and Rsm was 50 $\mu$m. The haze of the base material film 6 was 21.0 %.

(Production of Base Material Film 7)

With the same manner as the production of the base material film 1 except that the film 5 was used instead of the film 1, a surface of the film 5 was roughened (embossed), and thus the base material film 7 was obtained.
In the embossed surface of the base material film 7, Ra was 0.18 $\mu$m and Rsm was 50 $\mu$m. The haze of the base material film 6 was 14.0 %.

(Preparation for Material for Use in Hard Coat Layer)

By a homogenizer, 30 parts of hexa-functional urethane acrylate oligomer, 40 parts of butyl acrylate, 30 parts of isoboronyl methacrylate and 10 parts of 2,2-diphenyl ethane-1-on were mixed. And furthermore, a 40 % methyl isobutyl ketone solution of antimony pentoxide fine particles (the average particle diameter was 20 nm; one hydroxyl group is bonded to one antimony atom appearing on the surface of a pyrochlore structure) was mixed so that the weight of the antimony pentoxide fine particles accounts for 50 % by weight of the total solid content, with the result that the material for use in the hard coat layer was prepared.

(Preparation for Material for Use in Low-refractive index Layer)

As a fluorine-containing monomer, 70 parts by weight of vinylidene fluoride and 30 parts by weight of tetrafluoro ethylene were dissolved in methyl isobutyl ketone. Then, to this solution, hollow silica isopropanol dispersed sol (made by JGC Catalysts and Chemicals Ltd.; the solid content was 20 % by weight, the average primary particle diameter was about 35 nm, the outer shell thickness was about 8 nm) was added so that the hollow silica solid content reached 30 % by weight with respect to the fluorine-containing monomer; 3 % by weight of dipentaerythritol hexaacrylate (made by Shin-Etsu Chemical Co., Ltd.) was added with respect to fluorine-containing monomer; and 5 % by weight of an optical radical generating agent, Irgacure 184 (made by Ciba Specialty Chemicals Corporation) was added with respect to fluorine-containing monomer, with the result that the material for use in the low-refractive index layer was prepared.

EXAMPLE 1

The both surfaces of the base material film 1 were subjected to corona discharge treatment using a high-frequency oscillator (having an output of 0.8 kW) so that the surface tension was adjusted to 0.055 N/m. Then, the material for use in the hard coat layer was coated onto the embossed surface of the base material film 1 at a temperature of 25 °C and a relative humidity of 60 % using a die coater at a coating rate of 20 m/minute. Then, it was dried in a dry furnace maintained at a temperature of 80 °C, with the result that the coating was obtained. Ultraviolet irradiation (the accumulated amount of irradiation applied was 300 mJ/cm$^2$) was applied to this coating, and thus the hard coat layer being 60 $\mu$m in thickness was formed.
On the hard coat layer, the material for use in the low-refractive index layer was coated at a temperature of 25 °C and a relative humidity of 60 % using a wire bar coater at a coating rate of 20 m/minute. Then, it was left at a room temperature to be dried, and thus the coating was obtained. The coating was subjected to thermal treatment of 120 °C under an atmosphere of oxygen, and then ultraviolet irradiation was applied on conditions that the output was 160 W/cm and the irradiation distance was 60 mm, with the result that the low-refractive index layer being 100 nm in thickness (the refractive index is 1.37) was formed. The optical film 1 thus obtained was composed of the base material film 1, the hard coat layer and the low-refractive index layer.
With respect to the optical film 1, Ra (the surface on the side of the low-refractive index layer), the haze, the interference fringe, the pencil hardness and the weather resistance were evaluated. The results are shown in Table 1.

EXAMPLE 2

With the same manner as EXAMPLE 1 except that the base material film 2 was used instead of the base material film 1, the optical film 2 was obtained. With respect to the optical film 2, Ra (the surface on the side of the low-refractive index layer), the haze, the interference fringe, the pencil hardness and the weather resistance were evaluated. The results are shown in Table 1.

EXAMPLE 3

With the same manner as EXAMPLE 1 except that the base material film 3 was used instead of the base material film 1, the optical film 3 was obtained. With respect to the optical film 3, Ra (the surface on the side of the low-refractive index layer), the haze, the interference fringe, the pencil hardness and the weather resistance were evaluated. The results are shown in Table 1.

EXAMPLE 4

With the same manner as EXAMPLE 1 except that the base material film 4 was used instead of the base material film 1, the optical film 4 was obtained. With respect to the optical film 4, Ra (the surface on the side of the low-refractive index layer), the haze, the interference fringe, the pencil hardness and the weather resistance were evaluated. The results are shown in Table 1.

EXAMPLE 5

With the same manner as EXAMPLE 1 except that the base material film 5 was used instead of the base material film 1, the optical film 5 was obtained. With respect to the optical film 5, Ra (the surface on the side of the low-refractive index layer), the haze, the interference fringe, the pencil hardness and the weather resistance were evaluated. The results are shown in Table 1.

COMPARATIVE EXAMPLE 1

With the same manner as EXAMPLE 1 except that the film 1 was used instead of the base material film 1, the optical film 6 was obtained. With respect to the optical film 6, Ra (the surface on the side of the low-refractive index layer), the haze, the interference fringe, the pencil hardness and the weather resistance were evaluated. The results are shown in Table 1.

COMPARATIVE EXAMPLE 2

With the same manner as COMPARATIVE EXAMPLE 1 except that the coating rate for both the material for use in the hard coat layer and the material for use in the low-refractive index layer was changed to 10 m/minute, the optical film 7 was obtained. With respect to the optical film 6, Ra (the surface on the side of the low-refractive index layer), the haze, the interference fringe, the pencil hardness and the weather resistance were evaluated. The results are shown in Table 1.

COMPARATIVE EXAMPLE 3

With the same manner as EXAMPLE 1 except that the base material film 6 was used instead of the base material film 1, the optical film 8 was obtained. With respect to the optical film 8, Ra (the surface on the side of the low-refractive index layer), the haze, the interference fringe, the pencil hardness and the weather resistance were evaluated. The results are shown in Table 1.

COMPARATIVE EXAMPLE 4

With the same manner as EXAMPLE 1 except that the base material film 7 was used instead of the base material film 1, the optical film 9 was obtained. With respect to the optical film 9, Ra (the surface on the side of the low-refractive index layer), the haze, the interference fringe, the pencil hardness and the weather resistance were evaluated. The results are shown in Table 1.

[TAB. 1]

Table 1

| | | Base material film | | | Optical film | | | | |
|---|---|---|---|---|---|---|---|---|---|
| | | Roughening treatment | Ra [$\mu$m] | Haze [%] | Ra [$\mu$m] | Haze [%] | Interference fringe | Pencil hardness | Flexibility |
| | Ex. 1 | Emboss | 0.18 | 14.9 | 0.05 | 2.8 | ○ | ○ | ○ |

(continued)

| | | Base material film | | | Optical film | | | | |
|---|---|---|---|---|---|---|---|---|---|
| | | Roughening treatment | Ra [μm] | Haze [%] | Ra [μm] | Haze [%] | Interference fringe | Pencil hardness | Flexibility |
| | Ex. 2 | Emboss | 0.23 | 19.2 | 0.06 | 3.5 | ○ | ○ | ○ |
| | Ex. 3 | Emboss | 0.26 | 21.4 | 0.06 | 3.8 | ○ | ○ | ○ |
| | Ex. 4 | Emboss | 0.25 | 20.0 | 0.06 | 3.4 | ○ | ○ | ○ |
| | Ex. 5 | Emboss | 0.20 | 18.0 | 0.06 | 3.0 | ○ | ○ | ○ |
| | Comp. 1 ex. 1 | - | <0.015 | 1.5 | <0.01 | 2.2 | × | ○ | ○ |
| | Comp. ex. 2 | - | <0.015 | 1.5 | <0.01 | 2.0 | △ | ○ | ○ |
| | Comp. ex. 3 | Emboss | 0.25 | 21.0 | 0.06 | 4.0 | ○ | × | ○ |
| | Comp. 4 ex. 4 | Emboss | 0.18 | 19.0 | 0.06 | 2.5 | ○ | ○ | × |

These results show that when the functional layer was laminated on the multilayer film that was not roughened, the optical film thus obtained was more likely to produce interference fringes. They also show that as the coating rate for the material for use in the hard coat layer or the like was increased, the interference fringes become noticeable (COMPARATIVE EXAMPLES 1 and 2).
They also show that the optical film obtained by using a single-layer film composed of only the resin material (a) having a high flexural modulus was insufficiently flexible and that, in contrast, the optical film obtained by using a single-layer film composed of only the resin material (b) having a low flexural modulus had insufficient pencil hardness (COMPARATIVE EXAMPLES 3 and 4).
They also show that the optical film obtained by laminating the functional layer such as the hard coat layer and the anti-reflective layer on the multilayer base material film that had the a-layer composed of the resin material (a) having a flexural modulus of 3 GPa to 4 GPa and the b-layer composed of the resin material (b) having a flexural modulus lower than that of the resin material (a) and in which at least one of the outer surfaces was roughened had no interference fringes and was excellent in pencil hardness and flexibility even if the coating rate for the material for use in the hard coat layer or the like was increased (EXAMPLES 1 to 5).

**Claims**

1. An optical film comprising :

   a multilayer base material film comprising an a-layer composed of a resin material (a) having a flexural modulus of 3 GPa to 4 GPa and a b-layer composed of a resin material (b) having a flexural modulus lower than the flexural modulus of the resin material (a), at least one of outer surfaces of the base material film being roughened; and
   a functional layer laminated on the roughened surface of the base material film.

2. The optical film according to the claim 1,
   wherein the base material film contains an ultraviolet absorbing agent.

3. The optical film according to the claim 1,
   wherein the functional layer is a hard coat layer, an anti-reflective layer and/or an anti-fouling layer.

4. The optical film according to the claim 1,
   wherein an arithmetic average height (Ra: JIS B 0601-2001) of the roughened surface is 0.05 μm or more but 0.5 μm or less.

5. The optical film according to the claim 1,
   wherein an average length (Rsm: JIS B 0601-2001) of a profile curve element of the roughened surface is 10 $\mu$m or more but 100 $\mu$m or less.

6. The optical film according to the claim 1,
   wherein the base material film is 1 % or more but 50 % or less in a haze.

7. The optical film according to the claim 1,
   wherein the a-layer has a thickness of 20 $\mu$m or more, the b-layer has a thickness of 60 $\mu$m or less and the base material film has a total thickness of 30 $\mu$m to 200 $\mu$m.

8. The optical film according to the claim 1, further comprising:

   an x-layer composed of a resin material (x) having an affinity for both the resin materials constituting the a-layer and the b-layer, the x-layer being disposed between the a-layer and the b-layer.

9. The optical film according to the claim 8,
   wherein the x-layer has a thickness of 1 $\mu$m to 20 $\mu$m.

10. The optical film according to the claim 1, further comprising:

    a c-layer composed of a resin material (c) having an affinity for both the resin materials constituting the a-layer and the b-layer, the c-layer being disposed other than between the a-layer and the b-layer.

11. The optical film according to the claim 10,
    wherein the c-layer has a thickness of 5 $\mu$m to 100 $\mu$m.

12. The optical film according to the claim 1,
    wherein a difference between the flexural modulus of the resin material (a) constituting the a-layer and the flexural modulus of the resin material (b) constituting the b-layer falls within a range of 0.2 GPa to 2.5 GPa.

13. The optical film according to the claim 1,
    wherein the base material film contains an elastomer particle.

14. The optical film according to the claim 1,
    wherein the elastomer particle has a number average particle diameter of 2.0 $\mu$m or less.

## INTERNATIONAL SEARCH REPORT

| | International application No. |
|---|---|
| | PCT/JP2007/074103 |

A. CLASSIFICATION OF SUBJECT MATTER
*B32B7/02*(2006.01)i, *G02B5/30*(2006.01)i

According to International Patent Classification (IPC) or to both national classification and IPC

B. FIELDS SEARCHED

Minimum documentation searched (classification system followed by classification symbols)
B32B7/02, G02B5/30

Documentation searched other than minimum documentation to the extent that such documents are included in the fields searched
Jitsuyo Shinan Koho          1922-1996     Jitsuyo Shinan Toroku Koho     1996-2008
Kokai Jitsuyo Shinan Koho    1971-2008     Toroku Jitsuyo Shinan Koho     1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-264320 A  (Toray Industries, Inc.), 05 October, 2006 (05.10.06), Claims 1, 4; Par. No. [0017] (Family: none) | 1-14 |
| X | JP 2006-231658 A  (Toray Industries, Inc.), 07 September, 2006 (07.09.06), Claims 1, 2; Par. No. [0018] (Family: none) | 1-14 |
| X | JP 2006-106714 A  (Fuji Photo Film Co., Ltd.), 20 April, 2006 (20.04.06), Claim 1; Par. No. [0165] & WO 2006/030721 A1 | 1-14 |

|☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 March, 2008 (11.03.08) | 25 March, 2008 (25.03.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2007/074103 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-206303 A  (Sekisui Chemical Co., Ltd.), 28 July, 2000 (28.07.00), Claims 1, 2; Par. No. [0022] (Family: none) | 1-14 |
| A | JP 2002-249600 A  (Sekisui Chemical Co., Ltd.), 06 September, 2002 (06.09.02), Claims 1, 2; Par. No. [0029] (Family: none) | 1-14 |
| A | JP 2001-80013 A  (Teijin Chemicals Ltd.), 27 March, 2001 (27.03.01), Claim 1; Par. No. [0035] (Family: none) | 1-14 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06255053 A
- JP H08281882 A
- JP 2000206303 A
- JP 2002249600 A
- JP 2001080013 A